# EUROPEAN PATENT SPECIFICATION

(11) **EP 3 412 515 B1**
(45) Date of publication and mention of the grant of the patent: **30.09.2020**
(21) Application number: 16889171.1
(22) Date of filing: 30.12.2016
(51) Int. Cl.: B60R 21/20, B60R 21/217

(54) **AIRBAG HOUSING AND AIRBAG ASSEMBLY**
AIRBAGGEHÄUSE UND AIRBAGANORDNUNG
BOÎTIER DE COUSSIN DE SÉCURITÉ GONFLABLE ET ENSEMBLE COUSSIN DE SÉCURITÉ GONFLABLE

(30) Priority: 02.02.2016 CN 201610073716
(43) Date of publication of application: 12.12.2018
(73) Proprietor: Autoliv Development AB, 447 83 Vårgårda (SE)
(72) Inventor: AN, Xiaochao, Shanghai 201807 (CN); PENG, Binbin, Shanghai 201807 (CN)
(74) Representative: Feucker, Max Martin
(86) International application number: PCT/CN2016/113483
(87) International publication number: WO 2017/133365

(56) References cited:
- CN-A- 104 015 684
- CN-A- 105 922 964
- CN-U- 202 879 418
- CN-U- 203 438 974
- CN-U- 203 637 760
- CN-U- 205 801 021
- DE-A1-102005 004 451
- JP-A- 2010 264 802
- US-A- 5 813 707

## Description

### TECHNICAL FIELD

The present invention relates to the vehicle safety airbag technology, and in particular, to an airbag housing. The present invention further relates to a safety airbag assembly comprising the above-mentioned airbag housing.

### BACKGROUND

An existing automobile safety airbag assembly usually includes a safety airbag, a gas generator, and an airbag housing for accommodating the aforesaid elements. The safety airbag assembly is mounted onto an airbag cover at a respective position of a vehicle. When an emergency collision occurs at the vehicle, the gas generator is started in response to an output of a collision sensor to generate an expansion gas to inflate the safety airbag. The safety airbag thereby bursts through the airbag cover and enters the carriage to protect occupants (such as the driver and/or the passengers) of the vehicle. Such airbag housings are disclosed in DE 10 2005 004451 A1 and in US 5 813 707 A.

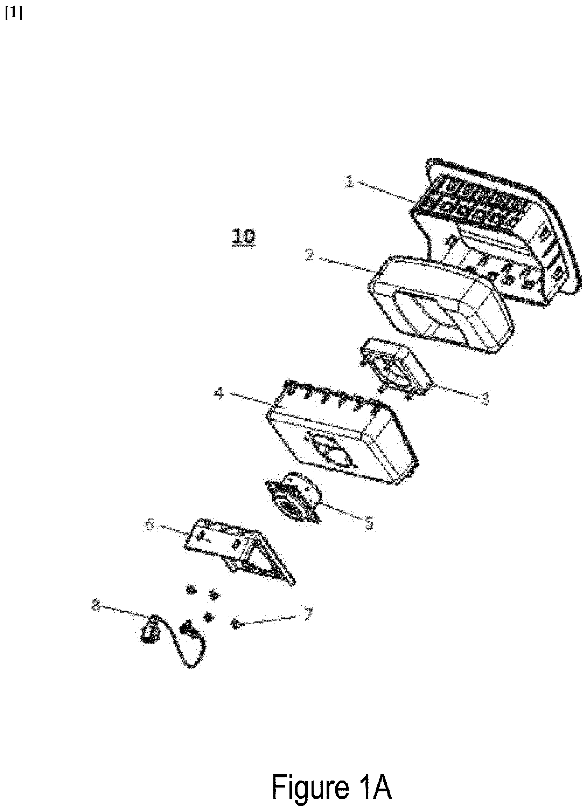

Specifically, FIG. 1A illustrates a vehicle safety airbag assembly in the prior art. As illustrated in FIG. 1A, a vehicle safety airbag assembly 10 comprises an airbag cover 1, a folded safety airbag 2, a pressing ring 3, an airbag housing 4, a gas generator 5, a support 6, nuts 7, and a wire harness 8 connected to the gas generator 5. A bottom center of the airbag housing 4 is provided with an interface part for mounting other components such as the gas generator 5. The interface part is provided with a central through hole. During mounting, an upper portion of the gas generator 5 sequentially passes through the central through hole of the interface part of the airbag housing 4 and the central through hole of the pressing ring 3, and is inserted into the central hole of the safety airbag 2. Moreover, four bolts respectively protrude from mounting holes on the bottommost layer of the safety airbag, sequentially passing through mounting holes on a bottom plate of the airbag housing 4 and on flanges of the gas generator 5, and the support 6, and are finally fixed through the nuts 7. In this way, the pressing ring 3 fixes the bottommost layer of the safety airbag 2 onto the bottom plate of the airbag housing 4. When a collision or a crash occurs at the vehicle, the gas generator 5 receives a signal transmitted through a wire harness connected to the gas generator 5, triggering an explosion. The gas generated from the explosion rapidly inflates the folded safety airbag 2. The inflated safety airbag expands and then bursts through the airbag cover 1 to enter the carriage, so as to prevent the occupants in the carriage from being injured by the impact.

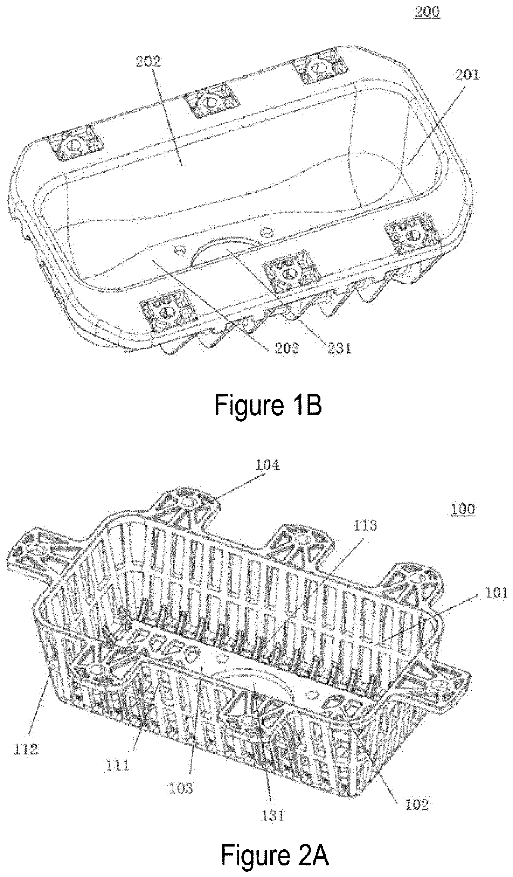

FIG. 1B illustrates a typical airbag housing 200 according to the prior art. The airbag housing 200 can be used as the airbag housing 4 in the safety airbag assembly illustrated in FIG. 1A. As illustrated in FIG. 1B, the airbag housing 200 has a bottom wall 202 and a side wall 201, wherein the bottom wall 202 and the side wall 201 form a chamber for accommodating the safety airbag. The bottom wall 202 of the airbag housing 200 is provided with a jointing part 203 for mounting other components of the safety airbag assembly. Moreover, the jointing part 203 is provided with an interface 231 formed as a through hole. At present, such airbag housing is mainly made of materials such as metal (like steel or aluminum), glass fiber, or synthetic resin through techniques such as injection molding, deep drawing, stamping and/or welding. If a common PA/40% glass fiber material is adopted, the weight of such airbag housing is usually 380-700 g. If a metal material is adopted, the weight is even heavier.

In recent years, energy saving, environmental protection, and cost reduction become subjects of pursuit of many industries due to continuous deterioration of the global environment. Specifically, for the automobile industry, governments of all countries including China put forward increasingly strict emission standards. For components and parts, main machine manufacturers put forward increasingly high cost requirements. Likewise, the weight and cost of the airbag housing also need to be adapted to meet the increasingly high requirements. However, the airbag housing (as illustrated in FIG. 1B) in the prior art is comparatively heavy in weight and high in cost. Therefore, an airbag housing which is light in weight, low in cost, and is capable of maintaining adequate strength is desired.

### SUMMARY

The purpose of the present invention is to provide an airbag housing, which is light in weight, low in cost, and capable of maintaining adequate strength, and a safety airbag assembly comprising the airbag housing.

The present invention provides an airbag housing, which is used in a safety airbag assembly. The airbag housing comprises: a bottom wall, comprising a jointing part used for mounting other components of the safety airbag assembly provided thereon; the jointing part being provided with an interface formed as a through hole; and a side wall forming a chamber with the bottom wall, wherein at least a part or all of the side wall is constructed as a hollowed-out structure. According to the present invention, since at least a part of the side wall is constructed as a hollowed-out structure, the amount of materials used can be significantly reduced, and the adequate strength can be maintained at the same time.

According to the present invention, the hollowed-out structure of the side wall may comprise a plurality of first side wall ribs provided at intervals, extending from a periphery of the bottom wall. According to the present invention, the hollowed-out structure of the side wall may further comprise second side wall ribs intersecting with the first side wall ribs. According to the invention, by adopting a plurality of ribs, the structure is easy to manufacture; the amount of materials used can be reduced; and the structure of the plurality of ribs can well bear pulling-pressing stress and bending stress, maintain the strength of the airbag housing.

According to an embodiment of the present invention, reinforcing ribs may be further provided at positions where the first side wall ribs and the bottom wall are connected. In such an embodiment, by providing reinforcing ribs at positions such as connecting positions where stress is easily accumulated, the strength of the airbag housing can be better maintained; and the capability of the housing in resisting impact deformation is improved.

According to the present invention, parts other than the jointing part of the bottom wall comprise a plurality of the first bottom wall ribs arranged at intervals, extending outward from an edge of the jointing part, and a plurality of the second bottom wall ribs extending in an intersecting manner with the first bottom wall ribs, such that the plurality of the first bottom wall ribs and the plurality of the second bottom wall ribs form a latticed structure comprising a plurality of lattices. According to the invention, the latticed structure of the bottom wall can significantly reduce the amount of materials used while preserving strength. In addition, if a solid structure is kept near the jointing part of the bottom wall, the solid structure may be used for absorbing heat produced by the gas generator mounted at this position and improving impact strength at this position.

According to the present invention, the airbag housing further comprises third bottom wall ribs obliquely extending from a middle of one side of at least one of the plurality of the lattices to a middle of another side. The structural strength can be improved with such third bottom wall ribs disposed in place. Moreover, when adopting molding methods such as injection molding during manufacturing, such third bottom wall ribs can facilitate the flow of the molding material and avoid defects of finished products.

According to an embodiment of the present invention, the jointing part is provided with a plurality of run-though holes arranged distributively. In such an embodiment, the plurality of run-through holes can reduce the amount of materials used for the jointing part and thus can reduce the amount of materials used for the airbag housing as a whole.

According to an embodiment of the present invention, the airbag housing further comprises flanges provided at a periphery of the side wall away from the bottom wall. In such an embodiment, the flanges can facilitate the mounting and fixation of the connecting structure when the airbag housing is fixed to the airbag cover or other vehicle parts.

According to an embodiment of the present invention, reinforcing ribs are further provided at positions where the flanges and the side wall are connected. In such an embodiment, providing reinforcing ribs at positions such as connecting positions where stress is easily accumulated better maintains the strength of the airbag housing; and the capability of the housing in resisting impact deformation is improved.

According to an embodiment of the present invention, the jointing part is constructed to protrude toward an opening of the chamber, such that a concave part is formed between an outer side of the bottom wall and a position corresponding to the jointing part, and that the jointing part is closer to the opening of the chamber than other parts of the bottom wall. In such an embodiment, the concave part on the outer side of the bottom wall of the airbag housing can be used for accommodating other components such as a gas generator of the airbag assembly, so as to save space.

According to an embodiment of the present invention, the first side wall ribs are constructed as a plate-type structure. The first side wall ribs being plate-type can provide improved strength, such that the airbag housing has stronger capability in resisting impact deformation.

The present invention further provides a safety airbag assembly, which comprises a gas generator, a safety airbag, and the airbag housing according to any one of the above-mentioned embodiments. Adopting the safety airbag assembly provided by the present invention can achieve the goal of having a safety airbag assembly that is light in weight, low in cost, and capable of maintaining adequate strength.

### BRIEF DESCRIPTION OF THE DRAWINGS

The features, advantages, and technical effects of the embodiments of the present invention will be described below with reference to drawings. In the drawings, the same reference sign represents the same elements:
FIG. 1A illustrates an exploded diagram of an airbag housing assembly according to the prior art.
FIG. 1B illustrates a stereoscopic view of the airbag housing according to the prior art.
FIG. 2A illustrates a stereoscopic view of an airbag housing according to embodiment 1 of the present invention.
FIG. 2B illustrates a stereoscopic view of the airbag housing according to embodiment 1 of the present invention.
FIG. 2C illustrates a front view of the airbag housing according to embodiment 1 of the present invention.
FIG. 3A illustrates a stereoscopic view of an airbag housing according to embodiment 2 of the present invention.
FIG. 3B illustrates a stereoscopic view of the airbag housing according to embodiment 2 of the present invention.
FIG. 4 illustrates a stereoscopic view of an airbag housing according to embodiment 3 of the present invention.
FIG. 5A illustrates a stereoscopic view of an airbag housing according to embodiment 4 of the present invention.
FIG. 5B illustrates a stereoscopic view of the airbag housing according to embodiment 4 of the present invention.

### DETAILED DESCRIPTION

The embodiments of the present invention will be described below with reference to the drawings. The detailed description and drawings below are used exemplarily for illustrating the principles of the present invention. The present invention is not limited to the described preferred embodiments. The scope of the present invention is defined by the claims.

Airbag housings and safety airbag assemblies according to the embodiments of the present invention will be described below with reference to FIGS. 2A-5B.

### Airbag housing

### <Embodiment 1>

FIG. 2A to FIG. 2C illustrate an airbag housing according to embodiment 1 of the present invention. As illustrated in FIG. 2A, the airbag housing comprises a bottom wall 102 and a side wall 101, wherein the bottom wall 102 and the side wall 101 jointly form a chamber. The chamber usually is used for accommodating components such as an airbag. A jointing part 103 used for mounting other components of the safety airbag assembly is provided on the bottom wall 102. The jointing part 103 is provided with an interface 131 formed as a through hole. Preferably, when the airbag housing and other components are mounted to form a safety airbag assembly, the airbag presses against and is mounted to the jointing part 103 of the airbag housing. A gas generator may pass through the interface 131 and be mounted to and aligned with an inflation port of the airbag.

As illustrated in FIG. 2A, the entire side wall 101 of the airbag housing is constructed as a hollowed-out structure. According to another embodiment of the present invention, the side wall 101 of the airbag housing may also be constructed as only having a partial hollowed-out structure. Compared with the airbag housing in the prior art, the airbag housing in the present invention which is wholly or at least partially constructed as a hollowed-out structure is lighter in weight and lower in cost.

As illustrated in FIG. 2A, the side wall 101 comprises a plurality of first side wall ribs 111 which are arranged at intervals and extend from a periphery of the bottom wall 102. Preferably, the first side wall ribs 111 on each sub-side wall are substantially uniformly arranged at intervals along the periphery of the bottom wall 102. Preferably, each of the plurality of the first side wall ribs 111 on each sub-side wall has a substantially consistent width in a respective extension direction. Therefore, the sub-side walls of the airbag housing are uniform in strength at all positions, such that when the safety airbag is expanded, the airbag housing is not easily damaged. In addition, the intervals between the first side wall ribs may be arranged according to needs. For example, at positions where a greater depth of the chamber causes the height of the side wall to be higher, the intervals between two adjacent first side wall ribs 111 may be properly reduced, so as to guarantee that the airbag housing has an enough capability to resist impact deformation. When a shallower depth of the chamber causes the height of the side wall to be shorter, the intervals between two adjacent first side wall ribs 111 may be set to be greater, so as to guarantee that airbag housing is lighter in weight and lower in cost on the premise that the capability in resisting impact deformation is preserved. As illustrated in FIGS. 2A-2C, the first side wall ribs 111 are constructed as a long strip-shaped structure.

In addition, the side wall 101 may further comprise second side wall ribs 112 intersected with the first side wall ribs 111. The second side wall ribs 112 are transversely intersected with the corresponding first side wall ribs 111 and connect adjacent first side wall ribs 111, such that a truss-like structure is formed through staggering. Therefore, the strength of the airbag housing can be improved and the capability in resisting impact deformation is improved. In the embodiment illustrated in FIGS. 2A-2C, the second side wall ribs 112 are intersected with all of the first side wall ribs 111. Preferably, the second side wall ribs 112 on the sub-side walls are substantially perpendicularly intersected with the corresponding first side wall ribs 111. In the embodiment illustrated in FIGS. 2A-2C, at a middle position of an extension length of each first side wall rib 111, a second side wall rib 112 is provided. The second side wall ribs 112 are also constructed to be long strip-shaped.

In addition, reinforcing ribs 113 are further provided at positions where the first side wall ribs and the bottom wall 102 are connected, as illustrated in FIG. 2A. Providing these reinforcing ribs reinforces the stress accumulation at the position near the connecting position of the bottom wall 102 and the side wall 101. Therefore, the capability of the airbag housing in resisting impact deformation is improved.

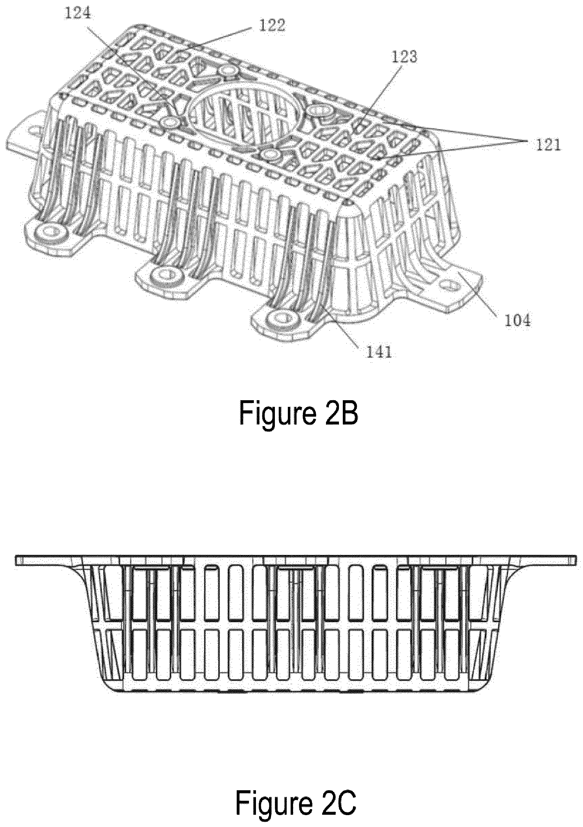

In addition, as illustrated in FIG. 2B, parts other than the jointing part 103 of the bottom wall 102 comprise a plurality of the first bottom wall ribs 121 which are disposed at intervals and extend outwards from an edge of the jointing part 103. As illustrated in FIGS. 2A and 2B, the jointing part 103 is constructed to be substantially rectangular. Preferably, the first bottom wall ribs 121 extend perpendicularly to the corresponding side of the jointing part 103. Preferably, the width of the first bottom wall ribs 121 along a respective extension direction is consistent. Preferably, the first bottom wall ribs 121 extend outwards from the periphery of the jointing part 103 to the side wall 101.

The bottom wall 102 may further comprise a plurality of second bottom wall ribs 122 which extend in a way intersecting with the first bottom wall ribs 121, such that other parts than the jointing part 103 of the bottom wall 102 form a latticed structure comprising a plurality of lattices. This latticed structure can improve the strength and thus improve the capability of the airbag housing in resisting impact deformation. Preferably, the second bottom wall ribs 122 are perpendicular to the first bottom wall ribs 121 and are arranged at uniform intervals along an extension direction of the first bottom wall ribs 121.

In addition, the bottom wall 102 further comprises third bottom wall ribs 123 which obliquely extend from a middle of one side of at least one of the plurality of lattices to a middle of another side. By this construction, When the airbag housing is injection-molded, adopting this construction makes the injection molding materials easy to flow into a central portion of each side of the lattices. Therefore, the airbag housing is not easily defective. In addition, the injection molding materials can rapidly flow. The manufacturing time of the airbag housing is then shortened; and manufacturing efficiency is improved. According to embodiment 1 of the present invention, a plurality of the third bottom wall ribs 123 may be connected head-to-tail to form a zigzag line, so as to connect all of the first bottom wall ribs 121 along a transverse direction of each first bottom wall rib 121. In this way, the flow of the injection molding materials can be further accelerated; and the capability of the airbag housing in resisting impact deformation is improved.

In addition, as illustrated in FIG. 2A, the airbag housing further comprises flanges 104 which are provided at a periphery of the side wall 101, away from the bottom wall 102. When the airbag housing and other components form an airbag assembly and the airbag assembly is mounted to a vehicle, the flanges 104 are fit with an airbag cover covering the chamber of the airbag housing or a jointing part for mounting the airbag housing at a corresponding position of the vehicle, so as to mount the airbag assembly to a corresponding position. As illustrated in FIG. 2A, the flanges 104 are disposed along a portion of the periphery of the side wall 101, away from the bottom wall 102. In embodiment 1 of the present invention, as illustrated in FIG. 2A, seven flanges 104 are provided at intervals along the periphery of the side wall. The positions and number of the flanges may be arranged according to needs. In addition, flanges that extend continusly may be further provided along the periphery of the side wall. On the other hand,constructing the flanges to be separately provided along a portion of the periphery of the side wall can further reduce the weight.

As illustrated in FIG. 2B, reinforcing ribs 141 are further provided at positions where the flanges 104 and the side wall 101 are connected. Preferably, as illustrated in FIG. 2B, the reinforcing ribs 141 may further extend along the side wall 101 connected with the flanges 104, so as to further reinforce the side wall. Areas of the reinforcing ribs 141, i.e., positions corresponding to the flanges, are usually areas in which the airbag assembly is fixedly connected with mounting positions such as a panel of the vehicle. As a result, providing the reinforcing ribs 141 enables the airbag housing to better bear the stress produced at the position where the airbag housing is fixedly connected with the mounting area.

As illustrated in FIG. 2C, in embodiment 1 of the present invention, the airbag housing is constructed to be in a quadrangular frustum pyramid shape; and the cross-sectional area of the airbag housing gradually decreases from the opening of the chamber to the bottom wall 102. In other words, the airbag housing has a certain draft angle. By adopting a design with the draft angle, the airbag housing can be better manufactured through the injection molding process; the hollowed-out structures of the side wall and the bottom wall can be manufactured through a pair of upper and lower dies only; and other assistant molding tools (such as sliders) are not needed. When the airbag housing has the draft angle, the plurality of the first side wall ribs 111 are radially distributed from the periphery of the bottom wall 102 to the opening of the chamber.

In addition, bottom wall ribs 124 may be further constructed onto at least one portion of the outer side of the bottom wall of the jointing part 103 of the airbag housing. Preferably, the bottom wall ribs 124 are constructed to be latticed at positions corresponding to the jointing part 103 on the outer side of the bottom wall 102. Preferably, the bottom wall ribs 124 may also extend through the first bottom wall ribs and the third bottom wall ribs. When the gas generator is detonated, the heat absorbed at the jointing part 103 is maximal and thus the impact strength of the jointing part 103 usually needs to be greater than that of other parts of the bottom wall 102. The jointing part 103 of the airbag housing having the above-mentioned construction can enable the weight of the airbag housing to be lighter on the premise that the impact strength is guaranteed.

In embodiment 1 of the present invention, the airbag housing may be made of a PA/LGF composite material, a PP/LGF composite material, or a PA/40% glass fiber composite material. Taking the airbag housing made of the PA/40% glass fiber composite material as an example, the range of the weight of the airbag housing in the prior art is 380 g-700 g. The weight of the airbag housing illustrated in FIG. 2A to FIG. 2F according to the present invention is about 220 g. Since the side wall and the bottom wall of the airbag housing according to the present invention are constructed to be a hollowed-out structure, the removal of this part of materials has an obvious beneficial effect on the optimization of the weight of the entire airbag housing and the strength is maintained at the same time.

### <Embodiment 2>

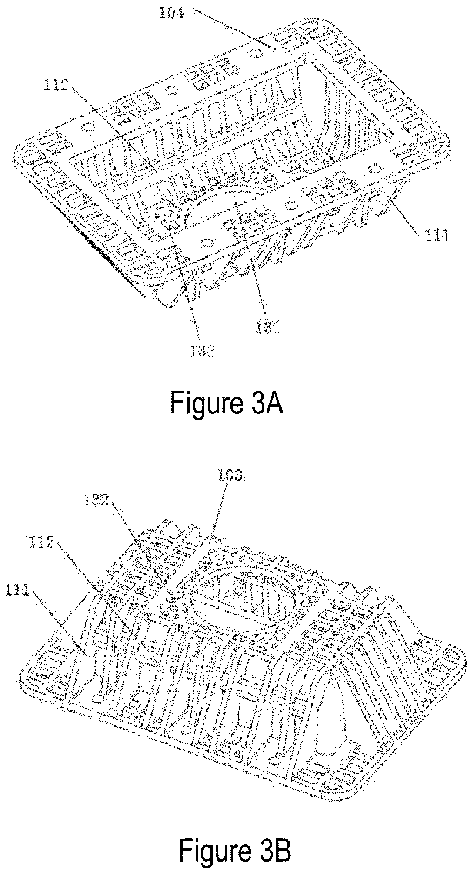

FIG. 3A and FIG. 3B illustrate an airbag housing according to embodiment 2 of the present invention. The airbag housing according to embodiment 2 is substantially the same as the airbag housing according to embodiment 1. A major difference lies in that the first side wall ribs 111 of the airbag housing according to embodiment 2 are constructed as a plate-type structure.

As illustrated in FIGS. 3A and 3B, preferably, a plane on which plate-like first side wall ribs 111 are located is substantially perpendicular to the periphery of the bottom wall 102 connected with the first side wall ribs 111. The plate-like first side wall ribs 111 can further improve the strength such that the airbag housing has greater capability in resisting impact deformation.

In addition, as illustrated in FIGS. 3A and 3B, the flanges 104 of the airbag housing according to embodiment 2 may be provided along the entire periphery of the side wall 101. Preferably, the flanges 104 may also be provided as a hollowed-out structure.

In addition, the cross section of the second side wall ribs 112 of the airbag housing according to embodiment 2 is constructed to be sector-shaped.

In addition, the first side wall ribs 111 of the airbag housing according to embodiment 2 do not continuously surround the entire side wall. Instead, two first side wall ribs 111 are provided and are respectively intersected with the plurality of second side wall ribs 112 on two side wall portions corresponding to long sides of the bottom wall.

In addition, as illustrated in FIG. 3B, the jointing part 103 of the airbag housing according to embodiment 2 is provided with a plurality of run-though holes 132 arranged distributively, such that the weight of the airbag housing is further reduced.

### <Embodiment 3>

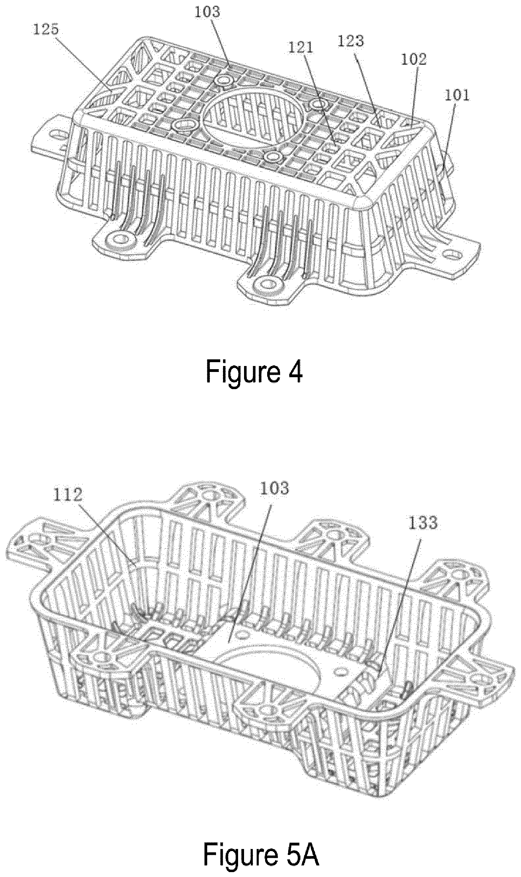

FIG. 4 illustrates an airbag housing according to embodiment 3 of the present invention. The construction of the airbag housing according to embodiment 3 is substantially the same as the construction of the airbag housing according to embodiment 1. A major difference lies in that the first bottom wall ribs 121 of the airbag housing according to embodiment 3 may extend from the periphery of the jointing part 103 to any position on the bottom wall 102 and do not necessarily extend to the side wall 101; and additional bottom wall ribs 125 and the like may be provided and extend from the first bottom wall ribs 121 to the side wall.

### <Embodiment 4>

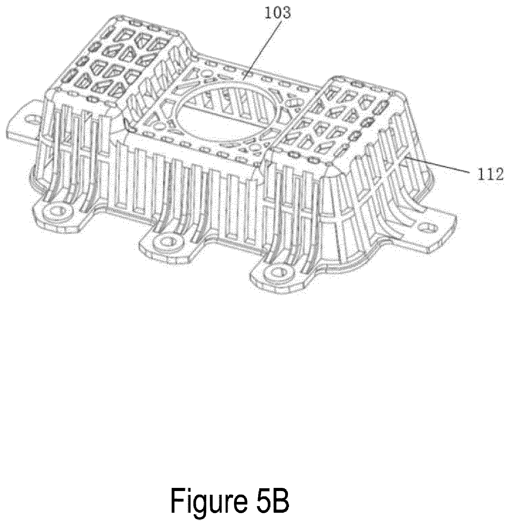

FIG. 5A and FIG. 5B illustrate an airbag housing according to embodiment 4 of the present invention. The construction of the airbag housing according to embodiment 4 is substantially the same as the construction of the airbag housing according to embodiment 1. A major difference lies in that the jointing part 103 is constructed to protrude towards an opening direction of the chamber, such that a concave part is formed between an outer side of the bottom wall 102 and a corresponding position on the jointing part 103, and that the jointing part 103 is closer to the opening of the chamber than other parts of the bottom wall 102. Adopting this construction can accommodate components such as the gas generator at the concave part of the bottom wall, thereby saving mounting space.

Preferably, connecting parts 133 formed between the jointing part 103 and other parts of the bottom wall may also be formed as a hollowed-out structure.

### Safety airbag assembly

The present invention further provides a safety airbag assembly, which comprises a gas generator, a safety airbag, and the airbag housing according to the above-mentioned embodiments.

### Other embodiments

As described above, although the exemplary embodiments of the present invention have already been described in the description with reference to the drawings, the present invention is not limited to the above-mentioned embodiments and may also have many other embodiments.

In the above-mentioned embodiments, it is described that the hollowed-out structure of the side wall 101 comprises a plurality of first side wall ribs 111. However, the present invention is not limited thereto. The side wall 101 may also be provided in other constructions as long as the side wall 101 has a hollowed-out structure. For example, the side wall 101 is provided with a plurality of run-though holes disposed distributively.

In the above-mentioned embodiments, the bottom wall is formed to be quadrilateral. Therefore, the side wall 101 comprises four side wall portions. However, the present invention is not limited thereto. According to needs, the bottom wall may be in other shapes such as polygonal shapes, elliptical shapes or other irregular shapes. Under this situation, the side wall may correspondingly extend around the bottom wall to form a chamber.

In the above-mentioned embodiments, a scenario where the number of the second side wall ribs 112 on the side wall portion corresponding to one edge of the bottom wall being one is described, as illustrated in FIG. 2A. However, the present invention is not limited thereto. The number of the second side wall ribs 112 on the side wall is not limited and may be equal to or greater than two.

In the above-mentioned embodiments, it is described that the second side wall ribs 112 are substantially perpendicularly intersected with the first side wall ribs 111. However, the present invention is not limited thereto. The second side wall ribs 112 on the sub-side walls may also be obliquely intersected with the first side wall ribs 111.

In the above-mentioned embodiments, it is described that the first side wall ribs 111 are in a rectangular strip-shaped structure and a plate-type structure. However, the shape of the first side wall ribs 111 is not limited thereto. The first side wall ribs 111 may be constructed to be in other various shapes.

In the above-mentioned embodiments, a scenario where the second side wall ribs 112 are strip-shaped or the cross section is sector-shaped is provided. However, the shape of the cross section of the second side wall ribs 112 is not limited thereto. The second side wall ribs 112 may be constructed to be in other various shapes. For example, the cross section of the second side wall ribs 112 is constructed to be circular or elliptical.

In the above-mentioned embodiments, it is described that the bottom wall 102 is constructed to comprise the first bottom wall ribs 121 and second bottom wall ribs 122 intersected with the first bottom wall ribs. However, the present invention is not limited thereto. As long as other parts than the jointing part of the bottom wall 102 are constructed as a hollowed-out structure, the other parts may be formed as any other structures.

In the above-mentioned embodiments, a scenario where the first side wall ribs 111 are provided at substantially uniform intervals is described, and a scenario where the intervals between the first side wall ribs 111 change with the depth of the airbag housing is further described. However, the interval distribution situation of the first side wall ribs 111 may also be additionally arranged according to needs.

In the above-mentioned embodiments, a scenario where the airbag housing is formed by adopting an injection molding process is described. However, the present invention is not limited thereto. Other methods such as stamping and 3D printing may also be adopted to form the airbag housing provided by the present invention.

## Claims

1. An airbag housing used in a safety airbag assembly, the airbag housing comprising:
a bottom wall (102) comprising a jointing part (103) used for mounting other components of the safety airbag assembly provided thereon; the jointing part (103) being provided with an interface (131) formed as a through hole; and
a side wall (101) forming a chamber with the bottom wall (102), wherein
at least a part or all of the side wall (101) is constructed as a hollowed-out structure, **characterized in that** parts other than the jointing part (103) of the bottom wall (102) comprise a plurality of first bottom wall ribs (121) provided at intervals, extending outward from an edge of the jointing part (103), and a plurality of second bottom wall ribs (122) extending in an intersecting manner with the first bottom wall ribs (121), such that the plurality of the first bottom wall ribs (121) and the plurality of the second bottom wall ribs (122) form a latticed structure comprising a plurality of lattices, and wherein the airbag housing further comprises third bottom wall ribs (123) obliquely extending from a middle of one side of at least one of the plurality of the lattices to a middle of another side.

2. The airbag housing according to claim 1, wherein the hollowed-out structure of the side wall (101) comprises a plurality of a first side wall ribs (111) arranged at intervals, extending from a periphery of the bottom wall (102).

3. The airbag housing according to claim 2, wherein the hollowed-out structure of the side wall (101) further comprises second side wall ribs (112) intersecting with the first side wall ribs (111).

4. The airbag housing according to claim 2 or 3, wherein reinforcing ribs (113) are further. provided at positions where the first side wall ribs (111) and the bottom wall (102) are connected.

5. The airbag housing according to claim 1, wherein the jointing part (103) is provided with a plurality of run-though holes (132) arranged distributively.

6. The airbag housing according to claim 1, wherein the airbag housing further comprises flanges (104) provided at a periphery of the side wall (101) away from the bottom wall (102).

7. The airbag housing according to claim 6, wherein reinforcing ribs (141) are further provided at positions where the flanges (104) and the side wall (101) are connected.

8. The airbag housing according to claim 1, wherein the jointing part is constructed to protrude toward an opening of the chamber, such that a concave part is formed between an outer side of the bottom wall (102) and a corresponding position on the jointing part (103), and that the jointing part (103) is closer to the opening of the chamber than other parts of the bottom wall (102).

9. The airbag housing according to claim 1, wherein the first side wall (111) ribs are constructed as a plate-type structure.

10. A safety airbag assembly, comprising:
a gas generator;
a safety airbag; and
the airbag housing according to any one of claims 1 to 9.

## Patentansprüche

1. Airbaggehäuse, das in einer Sicherheitsairbaganordnung verwendet wird, wobei das Airbaggehäuse Folgendes umfasst:
eine Bodenwand (102), das ein Zusammenfügungsteil (103) umfasst, das zum Montieren anderer Komponenten der darauf bereitgestellten Sicherheitsairbaganordnung verwendet wird; wobei das Zusammenfügungsteil (103) mit einer Grenzfläche (131) versehen ist, die als Durchgangsloch ausgebildet ist; und
eine Seitenwand (101), die mit der Bodenwand (102) eine Kammer ausbildet, wobei wenigstens ein Teil oder die gesamte Seitenwand (101) als ausgehöhlte Struktur aufgebaut ist, **dadurch gekennzeichnet, dass** andere Teile als der Zusammenfügungsteil (103) der Bodenwand (102) mehrere in Abständen bereitgestellte erste Bodenwandrippen (121), die sich von einer Kante des Zusammenfügungsteils (103) nach außen erstrecken, und mehrere zweite Bodenwandrippen (122), die sich auf überschneidende Weise mit den ersten Bodenwandrippen (121) nach innen erstrecken, umfassen, derart, dass die mehreren der ersten Bodenwandrippen (121) und die mehreren der zweiten Bodenwandrippen (122) eine Gitterstruktur ausbilden, die mehrere Gitter umfasst, und wobei das Airbaggehäuse ferner dritte Bodenwandrippen (123) umfasst, die sich aus einer Mitte einer Seite des wenigstens einen der mehreren der Gitter zu einer Mitte einer anderen Seite schräg erstrecken.

2. Airbaggehäuse nach Anspruch 1, wobei die ausgehöhlte Struktur der Seitenwand (101) mehrere in Abständen angeordnete erste Seitenwandrippen (111), die sich aus einem Umfang der Bodenwand (102) erstrecken, umfasst.

3. Airbaggehäuse nach Anspruch 2, wobei die ausgehöhlte Struktur der Seitenwand (101) ferner zweite Seitenwandrippen (112), die sich mit den ersten Seitenwandrippen (111) überschneiden, umfasst.

4. Airbaggehäuse nach Anspruch 2 oder 3, wobei Verstärkungsrippen (113) ferner an Stellen bereitgestellt sind, an denen die ersten Seitenwandrippen (111) und die Bodenwand (102) verbunden sind.

5. Airbaggehäuse nach Anspruch 1, wobei das Zusammenfügungsteil (103) mit mehreren Durchlauflöchern (132) versehen ist, die verteilt angeordnet sind.

6. Airbaggehäuse nach Anspruch 1, wobei das Airbaggehäuse ferner Flansche (104) umfasst, die an einem Umfang der Seitenwand (101) von der Bodenwand (102) entfernt bereitgestellt sind.

7. Airbaggehäuse nach Anspruch 6, wobei Verstärkungsrippen (141) ferner an Stellen bereitgestellt sind, an denen die Flansche (104) und die Seitenwand (101) verbunden sind.

8. Airbaggehäuse nach Anspruch 1, wobei das Zusammenfügungsteil aufgebaut ist, um in Richtung einer Öffnung der Kammer derart vorzustehen, dass ein konkaver Teil zwischen einer Außenseite der Bodenwand (102) und einer entsprechenden Stelle auf dem Zusammenfügungsteil (103) ausgebildet ist, und dass das Zusammenfügungsteil (103) näher an der Öffnung der Kammer als andere Teile der Bodenwand (102) liegt.

9. Airbaggehäuse nach Anspruch 1, wobei die ersten Seitenwand (111) rippen als plattenartige Struktur aufgebaut sind.

10. Sicherheitsairbaganordnung, die Folgendes umfasst:
einen Gasgenerator;
einen Sicherheitsairbag; und
das Airbaggehäuse nach einem der Ansprüche 1 bis 9.

## Revendications

1. Boîtier de coussin gonflable utilisé dans un ensemble coussin gonflable de sécurité, le boîtier de coussin gonflable comprenant :
une paroi inférieure (102) comprenant une partie de jonction (103) utilisée pour monter d'autres éléments de l'ensemble coussin gonflable de sécurité prévu sur celle-ci ;
la partie de jonction (103) étant pourvue d'une interface (131) formée comme un trou traversant ; et
une paroi latérale (101) formant une chambre avec la paroi inférieure (102),
au moins une partie ou la totalité de la paroi latérale (101) étant construite sous la forme d'une structure évidée, **caractérisée en ce que** des parties autres que la partie de jonction (103) de la paroi inférieure (102) comprennent une pluralité de premières nervures de paroi inférieure (121) prévues à intervalles, s'étendant vers l'extérieur depuis un bord de la partie de jonction (103), et une pluralité de deuxièmes nervures de paroi inférieure (122) s'étendant de manière croisée avec les premières nervures de paroi inférieure (121), de telle sorte que la pluralité des premières nervures de paroi inférieure (121) et la pluralité des deuxièmes nervures de paroi inférieure (122) forment une structure en treillis comprenant une pluralité de treillis, et le boîtier de coussin gonflable comprenant en outre des troisièmes nervures de paroi inférieure (123) s'étendant obliquement depuis le milieu d'un côté d'au moins l'un de la pluralité des treillis vers le milieu d'un autre côté.

2. Boîtier de coussin gonflable selon la revendication 1, dans lequel la structure évidée de la paroi latérale (101) comprend une pluralité de premières nervures de paroi latérale (111) disposées à intervalles, s'étendant depuis une périphérie de la paroi inférieure (102).

3. Boîtier de coussin gonflable selon la revendication 2, dans lequel la structure évidée de la paroi latérale (101) comprend en outre des deuxièmes nervures de paroi latérale (112) croisant les premières nervures de paroi latérale (111).

4. Boîtier de coussin gonflable selon la revendication 2 ou 3, dans lequel des nervures de renforcement (113) sont en outre prévues à des positions où les premières nervures de paroi latérale (111) et la paroi inférieure (102) sont reliées.

5. Boîtier de coussin gonflable selon la revendication 1, dans lequel la partie de jonction (103) est prévue avec une pluralité de trous traversants (132) disposés de manière distributive.

6. Boîtier de coussin gonflable selon la revendication 1, dans lequel le boîtier de coussin gonflable comprend en outre des rebords (104) prévus à une périphérie de la paroi latérale (101) à l'écart de la paroi inférieure (102).

7. Boîtier de coussin gonflable selon la revendication 6, dans lequel des nervures de renforcement (141) sont en outre prévues à des positions où les rebords (104) et la paroi latérale (101) sont reliés.

8. Boîtier de coussin gonflable selon la revendication 1, dans lequel la partie de jonction est construite pour faire saillie vers une ouverture de la chambre, de telle sorte qu'une partie concave est formée entre un côté extérieur de la paroi inférieure (102) et une position correspondante sur la partie de jonction (103), et que la partie de jonction (103) est plus proche de l'ouverture de la chambre que d'autres parties de la paroi inférieure (102).

9. Boîtier de coussin gonflable selon la revendication 1, dans lequel les nervures de la première paroi latérale (111) sont construites sous la forme d'une structure de type plaque.

10. Ensemble coussin gonflable de sécurité, comprenant :
un générateur de gaz ;
un coussin gonflable de sécurité ; et
le boîtier de coussin gonflable selon l'une quelconque des revendications 1 à 9.
